Europäisches Patentamt

European Patent Office

Office européen des brevets

(19)

(11) EP 0 731 929 B1

(12) EUROPÄISCHE PATENTSCHRIFT

(45) Veröffentlichungstag und Bekanntmachung des Hinweises auf die Patenterteilung:
**06.10.1999 Patentblatt 1999/40**

(21) Anmeldenummer: **95903229.3**

(22) Anmeldetag: **02.12.1994**

(51) Int Cl.[6]: **G01V 3/10**

(86) Internationale Anmeldenummer:
**PCT/DE94/01425**

(87) Internationale Veröffentlichungsnummer:
**WO 95/15507 (08.06.1995 Gazette 1995/24)**

(54) **VERFAHREN UND ANORDNUNG ZUR ELEKTROMAGNETISCHEN DETEKTION EINES OBJEKTES**

METHOD AND APPARATUS FOR DETECTING AN ELECTRICALLY CONDUCTING OBJECT

PROCEDE ET DISPOSITIF PERMETTANT DE DETECTER UN OBJET ELECTROCONDUCTEUR

(84) Benannte Vertragsstaaten:
**DE**

(30) Priorität: **02.12.1993 DE 4341003**

(43) Veröffentlichungstag der Anmeldung:
**18.09.1996 Patentblatt 1996/38**

(73) Patentinhaber: **Daimler-Benz Aerospace Aktiengesellschaft
81663 München (DE)**

(72) Erfinder: **NICOLA, Johann
D-88483 Burgrieden (DE)**

(74) Vertreter: **Fröhling, Werner Otto, Dr.
Daimler-Benz Aerospace AG
Patentabteilung
Wörthstrasse 85
89077 Ulm (DE)**

(56) Entgegenhaltungen:
**EP-A- 0 082 779        EP-A- 0 179 601
US-A- 2 919 397        US-A- 3 818 323
US-A- 4 620 192**

- **DATABASE WPI Section EI, Week 8429 Derwent Publications Ltd., London, GB; Class S03, AN 84-181012 & SU,A,1 053 044 ( BALUEV S K ), 7.November 1983**
- **FUNKSCHAU, Bd. 32,Nr. 1, 1.Januar 1960 Seiten 7-9, O. REINWALD 'Metallsuchgeräte mit erhöhter Empfindlichkeit'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung geht aus von einem Verfahren zur Detektion eines Objektes, dessen elektromagnetischen Eigenschaften sich von denen des umgebenden Mediums unterscheiden, nach dem Oberbegriff des Patentanspruchs 1 und einer Anordnung zur Durchführung des Verfahrens nach dem Oberbegriff des Patentanspruchs 8.

Bei vielen Anwendungen ist es erforderlich, elektrisch leitende, insbesondere metallische Objekte, z.B. Müllfässer, Bomben (Blindgänger) sowie Minen in einer elektrisch schwachleitenden Umgebung, z.B. Erdboden oder Wasser, zu detektieren.

Dafür sind verschiedene elektromagnetische, optische oder akustische Verfahren bekannt, die alle darauf beruhen, daß zunächst elektromagnetische, optische oder akustische Wellen in das (Umgebungs-)Medium ausgesandt und an den zu detektierenden Objekt reflektiert werden. Das reflektierte Signal wird dann ausgewertet.

Aus der Druckschrift SU-A- 1 053 044 ist ein Verfahren bekannt, um in einem in die Erde gebohrten Bohrloch die dieses umgebenden Gesteinsschichten zu bestimmen. Dazu wird eine räumliche Hintereinanderanordnung aus einer Sendespule und zwei Empfangsspulen verwendet. Alle Spulen besitzen dieselbe (Bohrloch-)Längsachse. Von der Sendespule wird ein moduliertes elektromagnetisches Feld ausgesandt, an den Gesteinsschichten reflektiert und von den Empfangsspulen detektiert. Zur Auswertung werden die Empfangssignale mit dem Sendesignal korreliert und daraus die Zusammensetzung der Gesteinsschichten ermittelt.

Aus der Druckschrift Funkschau, Bd. 32, Nr. 1, 1960, Seiten 7 bis 9, O. Reinwald "Metallsuchgeräte mit erhöhter Empfindlichkeit" wird der Aufbau und die Wirkungsweise verschiedener Metallsuchgeräte beschrieben. Bei einem dieser Geräte wird zur Detektion eines elektrisch leitenden Körpers eine sogenannte Suchspule verwendet, die sich innerhalb einer Indikatorspule befindet. Dabei stehen die Längsachsen der Such- und der Indikatorspule orthogonal aufeinander. Das elektrische Signal der Indikatorspule wird ausgewertet zur Detektion des Körpers.

Der Erfindung liegt die Aufgabe zugrunde, ein Verfahren und eine Anordnung anzugeben, die vorteilhaft zur Detektion eines elektrisch leitenden Objektes geeignet ist.

Diese Aufgabe wird gelöst durch die in den kennzeichnenden Teilen der Patentansprüche 1 und 8 angegebenen Merkmale. Vorteilhafte Ausgestaltungen und/oder Weiterbildungen sind den Unteransprüchen entnehmbar.

Die Erfindung wird im folgenden anhand von Ausführungsbeispielen unter Bezugnahme auf schematisch dargestellte Figuren näher erläutert. Es zeigen

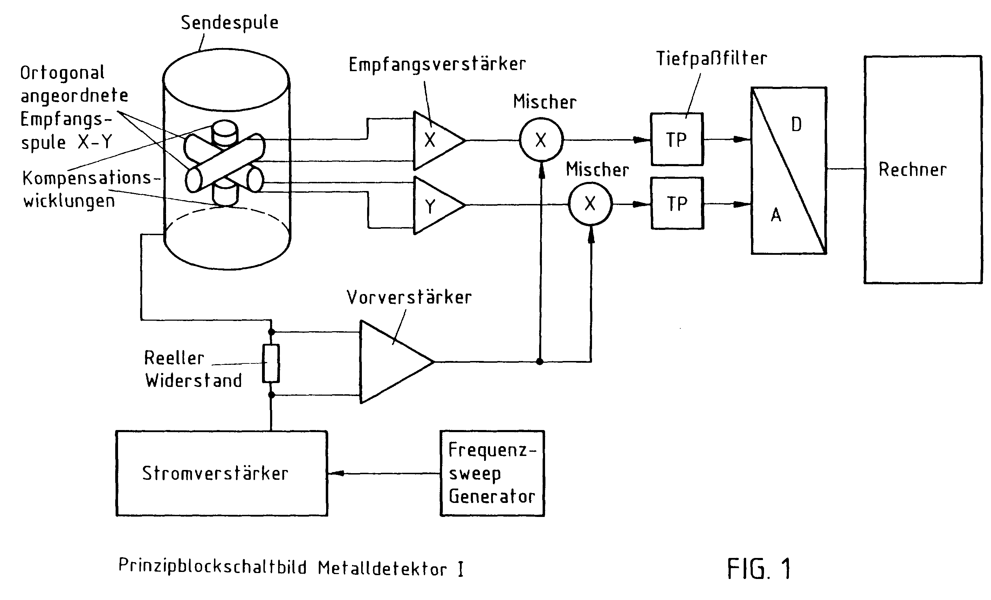

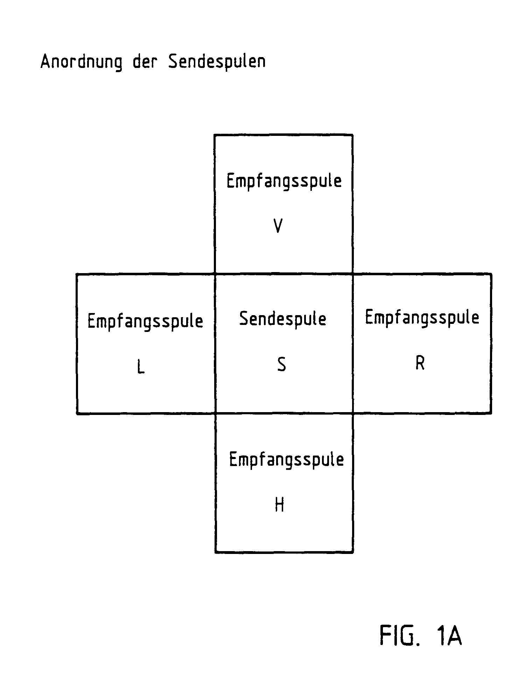

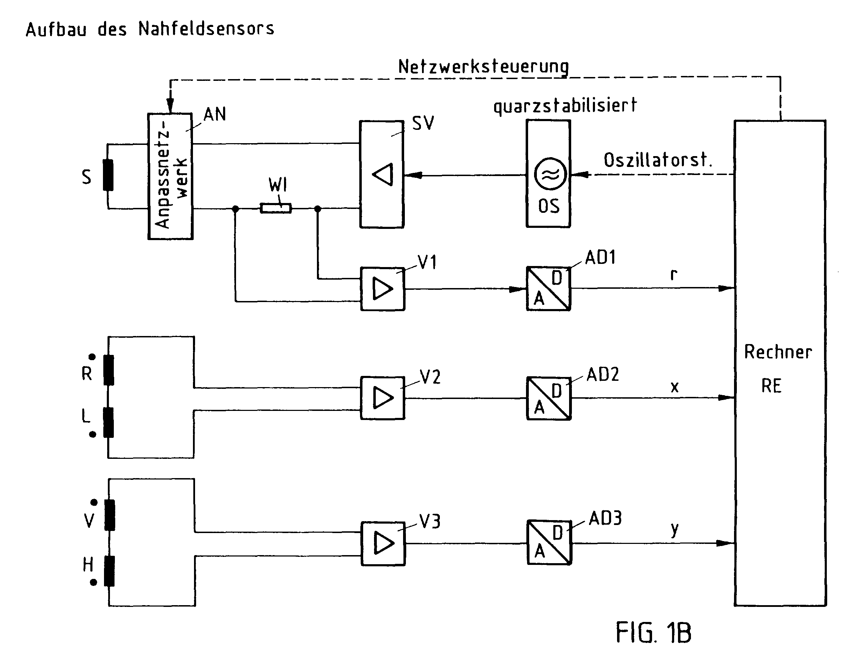

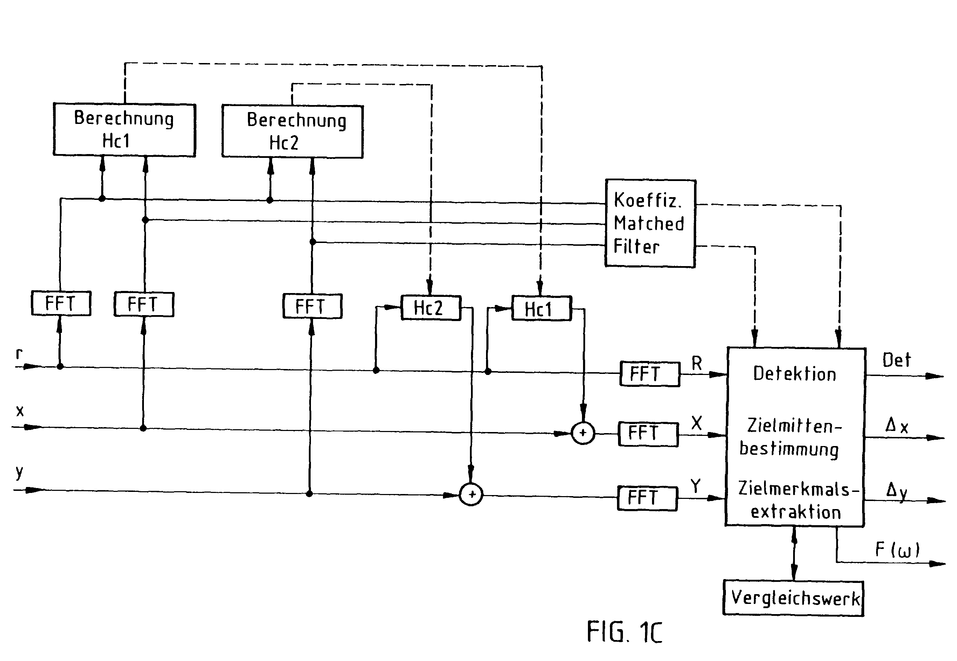

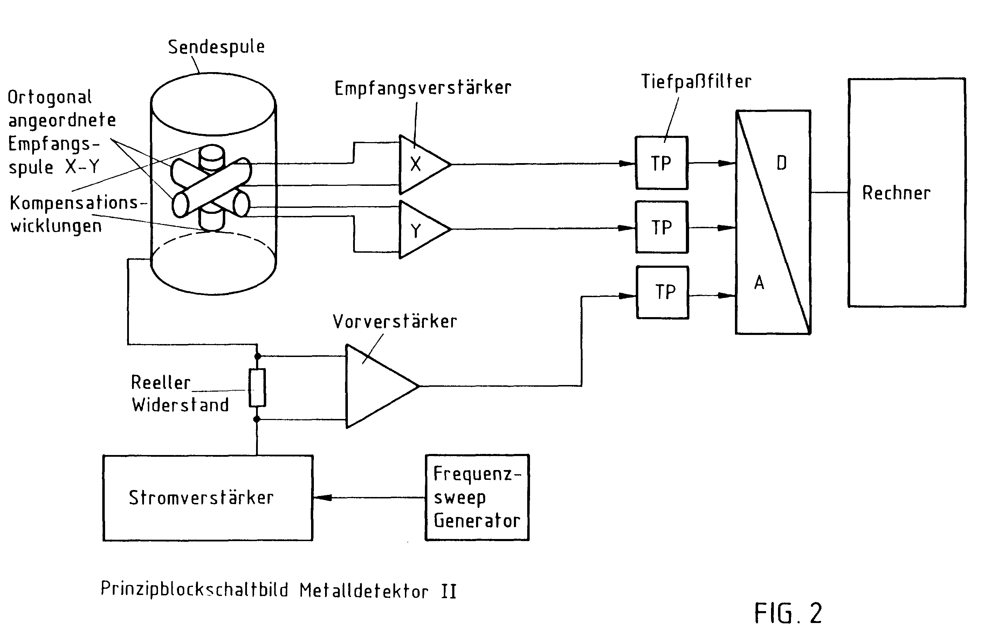

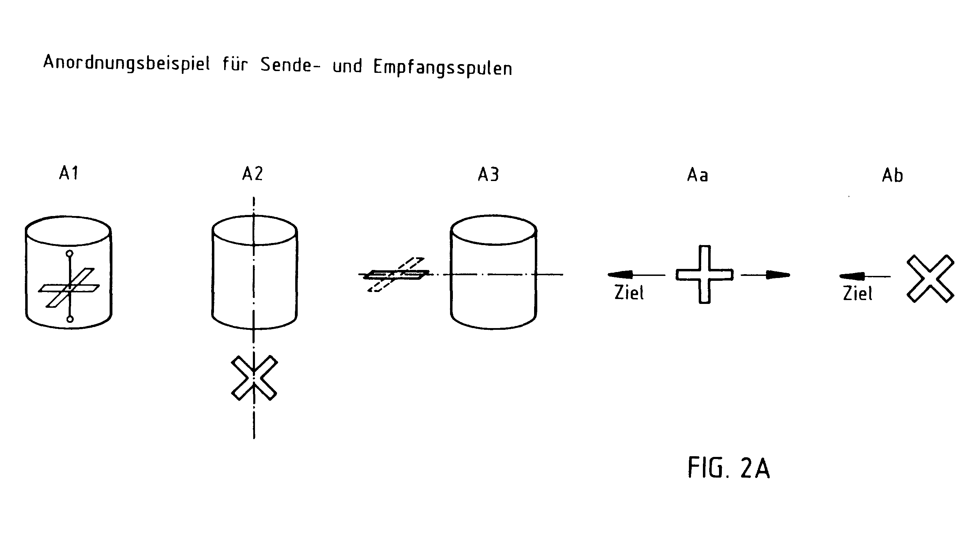

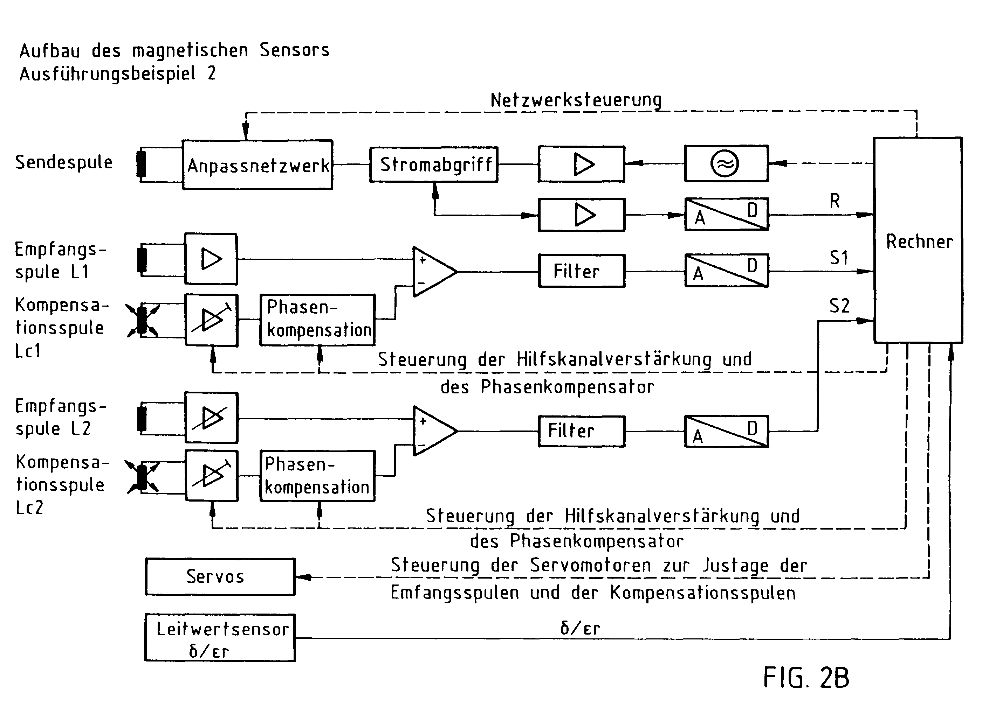

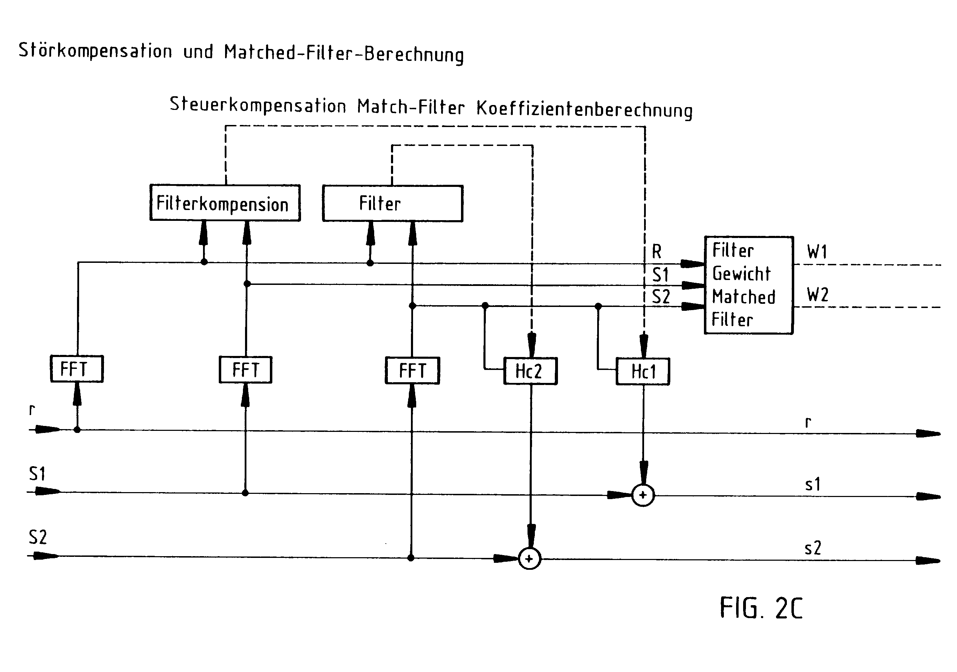

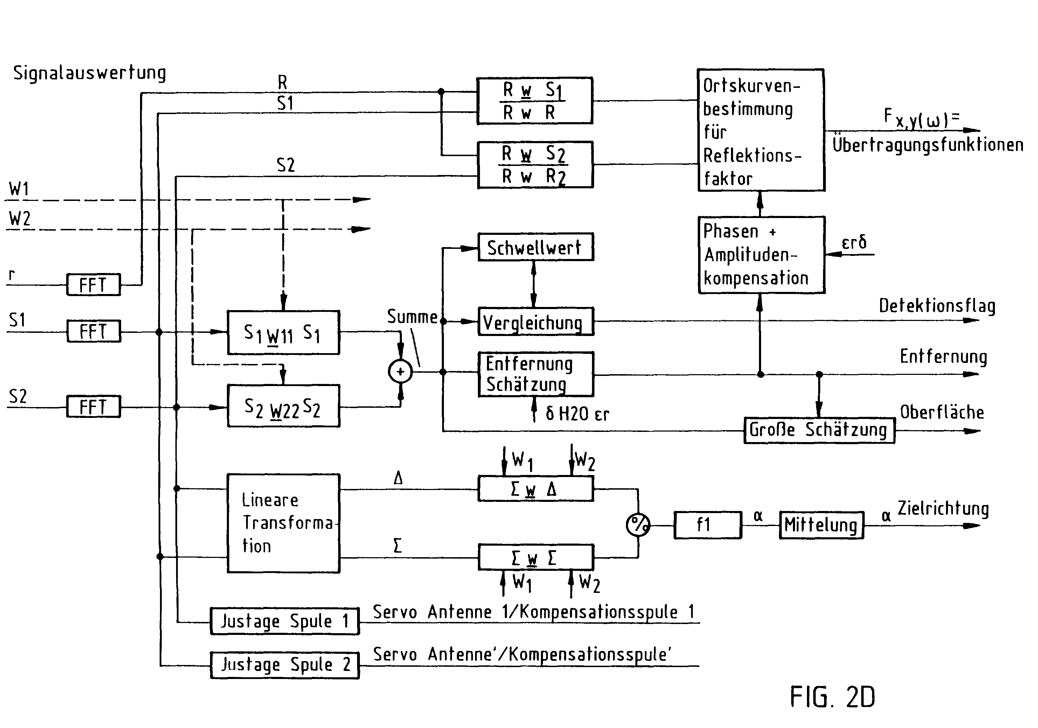

FIG. 1, 1a, 1b, 1c und FIG. 2, 2a, 2b, 2c, 2d Blockschaltbilder von Ausführungsbeispielen.

Systembeschreibung:

Aufbau und Funktion eines Metalldetektors:

Im folgenden werden zwei Beispiele von trägergestützten Metalldetektoren beschrieben.

Der Objektdetektor von FIG. 1 wird verwendet um Objekte zu detektieren und klassifizieren, welche sich in einem geringen Abstand (kleiner 1m) vom Sensor befinden und bei dem der Sensorträger über das Objekt geführt wird.

Der Metalldetektor nach FIG. 2 dient der Detektion eines Objektes über eine größere Entfernung d (1m<d<10m)sowie der Entfernungsschätzung, der Zielpeilung, der Größenschätzung sowie der Objektklassifikation. Außerdem erlaubt dieser Aufbau die Gewinnung von Objektmerkmalen wie Achsenverhältnisse und ihre Lage.

Aufbau des Metalldetektors I, FIG. 1:

Ein quarzstabilisierter Sinusgenerator (Frequenz-sweep-Generator), der in der Frequenz durchstimmbar ist, erzeugt eine Signalspannung, deren Frequenz zwischen 1 kHz und 1MHz einstellbar ist. Der Stromverstärker verstärkt diese Spannung und liefert den benötigten Erregerstrom für die Sendespule. Der Stromvestärker enthält außerdem eine Anpaßschaltung, welche den Verstärkerausgang an die Sendespule anpaßt (Impedanzanpassung). Figur la zeigt die Anordnung der Sende- und Empfangsspulen; Figur 1b zeigt den Aufbau eines zugehörigen Sensors.

Gemäß Fig. 1a besteht die Anordnung aus einer Sendespule S und vier Empfangsspulen L, R, H, V. Die Rahmenspule S erzeugt das benötigte Magnetfeld. Die jeweils gegenüberliegenden Empfangsspulen L, R bzw. V, H, sind mechanisch so gestaltet, daß bei gleicher magnetischer Induktion der magnetische Fluß identisch ist. Durch Serienschaltung mit gegenläufigem Wicklungssinn wird erreicht, daß die Ausgangsspannung dieses Empfangskanales für diesen Fall verschwindet. Ist ein Objekt (Ziel) im Wirkungsbereich des Sensors, so führt dies zu einer Verzerrung des Magnetfeldes. Die Feldsymmetrie ist gestört, es wird dadurch eine detektierbare Spannung in den Empfangswicklungen erzeugt.

Der den Spulen R - L zugeordnete Empfangskanal wird im folgenden mit x gezeichnet, der den Spulen V - H zugeordnete mit y . Die symmetrisch angeordneten Empfangsspulen lassen sich geringfügig in ihrer Größe variieren. Durch geeignetes Zusammenschalten der gegenüberliegenden Empfangsspulen wird erreicht, daß die resultierenden Empfangsspannungen in Abwesenheit eines Objektes (Zieles) nahezu verschwinden. Der mechanische Feinabgleich erfolgt durch die Veränderung der Empfangsspulenfäche.

Rauscharme Empfangsverstärker heben den Pegel der X- und Y-Komponenten des Empfangssignals an und führen diese zwei A/D-Wandlern zu.

Fig.1b zeigt den Aufbau eines Nahfeldsensors.

Der Nahfeldsensor besteht aus den folgenden Komponenten:

- Sendespule S mit zugehörigem Anpaßnetzwerk AN,
- Vier Empfangsspulen R, L, V, H, wobei jeweils gegen überliegend angeordnete Spulenpaare R, L bzw. H, V in Reihe geschaltet sind,
- Drei Vorverstärkern V1, V2, V3, mit nachgeschalteten A/D-Wandlern AD1, AD2, AD3,
- einem induktionsarmen Widerstand WI
- einem Sendeverstärker SV
- einem Oszillator OS
- einem Rechner RE,

Der Rechner RE steuert den Oszillator OS und das Anpaßnetzwerk AN in Abhängigkeit einer vorgebbaren Frequenzfolge und übernimmt die Signalverarbeitung der Empfangskanäle x,y und des Bezugskanals r gemäß Fig. lc, was nachfolgend noch näher erläutert wird.

Der Oszillator OS erzeugt eine Sinusspannung. Die Frequenzstabilisierung erfolgt mit Hilfe einer PLL-Schleife und eines Quarzreferenzoszillators. Durch Veränderung des Teilerverhältnisses eines einstellbaren Teilers läßt sich der Oszillator in festen Frequenzschritten, z.B. 100 Hz - Schritten, durchstimmen. Das Sinussignal wird dem Sendeverstärker SV zugeführt. Der Sendeverstärker verstärkt das Oszillatorsignal und liefert den notwendigen Sendestrom für die Sendespule S. An dem mit der Sendespule S in Reihe liegenden Widerstand WI wird eine stromproportionale Spannung abgegriffen, welche ein Bezugssignal r repräsentiert.

Das Anpaßnetzwerk AN besteht aus einem Anpaßtransformator mit Abgriffen und Kompensationskondensatoren. Die Kondensatoren kompensieren den induktiven Blindwiderstand der Sendespule S. Der Transformator ermöglicht die Leistungsanpassung der Sendespule S an den Verstärkerausgang des Sendeverstärkers SV. Jede Sendefrequenz erfordert einen eigenen Kompensationskondensator.

Die Sendespule S besteht einem nichtleitenden Rohr, z.B. Kunststoff, in dessen Innern Leiterschleifen verlaufen, die einen quadratischen Spulenrahmen bilden.

Die Empfangsspulen R, L, H, V sind ähnlich wie die Sendespule S aufgebaut,jedoch erlaubt eine Spannvorrichtung an den der Sendespule abgewandten Seite der Empfangsspule eine Verlängerung oder Verkürzung der effektiven Schleifenlänge .Durch diese Längenänderungen wird einSymmetrieabgleich durchgeführt. Die Empfangswicklungen werden mit entgegengesetzten Windungssinn in Reihe geschaltet. Der Ausgang der Empfangswicklungen wird den Vorverstärkern V2, V3 zugeführt. Diese Vorverstärker sind rauscharme Ausführungen. Diese verstärken die Empfangssignale der Kanäle "x" und "y" auf einen den nachgeschalteten A/D-Wandlern AD2, AD3 gemäßen Wert. Der dritte Vorverstärker AD1 verstärkt die am Widerstand WI abgegriffene Spannung. Sie bildet das Referenzsignal (Bezugssignal) "r ".

Die A/D-Wandler erzeugen aus dem analogen Signal eine Bitfolge. Die Abtastrate beträgt beispielsweise mindestens 40kHz, die erzeugte Wortbreite 16 Bit.

Fig. 1c zeigt den Datenfluß der Signalverarbeitung im Rechner RE. Das Datenflußdiagramm enthält folgende Verarbeitungsblöcke:

- Fast Fourier Transformation (FFT)
- Berechnung der Impulsantwort für die Kompensations filter (Berechnung Hc1 / Hc2)
- Die Kompensationsfilter (Hc1 Hc2)
- Additionsstufen
- Koeffzientenberechnung für die Gewichtungsfilter (Koeffiz Matched Filter)
- Verarbeitungsblock zur Detektion, Zielmittenbestimmung, Zielmerkmalsextraktion und Vergleichswert speicherung.

Verarbeitungsblock FFT:

Die Verbeitungsblöcke FFT für die Empfangskanäle "x" und "y" sowie für den Referenkanal "r" treten jeweils zweimal auf. Die Verarbeitungsblöcke am Signaleingang dienen während eines Eichzyklus der Vorverarbeitung der Signale zur Berechnung der Koeffizienten für das Kompensationsfilter und das Gewichtungsfilter (Matched Filter). Die drei Verarbeitungsblökke auf der rechten Bildseite führen eine diskrete Fourieranalyse der beiden Empfangssignale "x", "y" und der Sendeerregung "r" durch. Die Blöcke beinhalten außer dem eigentlichen FFT- Algorithmus auch eine Fensterung der Signale. Diese ist im Falle der Koeffizientenberechnung eine Rechteckfensterung, im Falle der Signalanalyse vorzugsweise die Dolph-Chebeyshev-Fensterung.

Kompensationsfilter (Hc1 Hc2):

Das Kompensationfilter hat die Aufgabe, die Magnetfelderzeugung und die durch mangelnde Entkopplung der Sende- und Empfangsspulen sowie durch Raumanisotropie hervorgerufenen und nicht mechanisch kompensierbaren Störungen nachzubilden. Das Kompensationfilter wird vom Referenzsignal angeregt und liefert am Ausgang die Nachbildung der Störung. Durch Subtrakion von der realen Störung kann die Reststörleistung minimiert werden, vorzugsweise auf vernachlässigbare Werte.

Berechnung der Impulsantwort des Kompensationsfilter (Berechnung Hc1 / Hc2):

Die optimale Impulsantwort ergibt sich als Lösung eines linearen Gleichungssytems. Dabei ist der Lösungsvektor die Impulsantwort des Filters. Die Zeilenvektoren der Koeffizientenmatrix ergeben sich durch zyklisches Verschieben der Autokorrelationsfunktion des Referenzkanals; die Inhomogenitätsvektoren errechnen sich aus der Kreuzkorrelationsfunktion der Störungen der Kanäle "x" und "y" mit dem Referenzsignal "r". Die Schätzung der Korrelationsfunktionen erfolgt nach Fouriertransformation und Bildung der Kreuzleistungsdichte bzw. der Autoleistungsdichte durch deren Rücktransformation in den Zeitbereich. Zur Verbesserung der statistischen Stabilität werden mehrere Zeitproben der Signale entnommen, fouriertransformiert und die resultierenden Leistungsdichten einem Mittelungsprozess unterworfen. Bei der Bildung der Korrelationsfunktion sind die üblichen Vorsorgemaßnahmen zu treffen um zu verhindern, daß eine zyklische Korrelation gebildet wird.

Additionsstufen:

In den Additionsstufen wird das mit Hilfe der Kompensationsfilter aus dem Sendesignal erzeugte Kompensationssignal mit negativem Vorzeichen zum Störsignal addiert.

Koeffizientenberechnung für die Gewichtungsfilter:

Für die Zieldetektion, die Zielmittenbestimmung und die Zielmerksmalextraktion müssen Korrelationsprodukte mit Schwellwerten verglichen oder untereinander in Beziehung gesetzt werden. So ist z.B. die Signalleistung der quadratische Mittelwert des Signales. Diese Größen lassen sich mit Hilfe der inversen Fouriertransformation aus den assoziierten Leistungsdichten gewinnen. Zur besseren Schätzung dieser Größen müssen die Signale zuerst gefiltert werden.

Dies erfolgt am günstigsten in der Frequenzdomäne durch Multiplikation mit einer Gewichtsfunktion. Diese Gewichte errechnen sich unter Annahme eines Optimalitätskriterium aus dem Verhältnis aus Leistungsdichte des Senderspektrums und dem Leistungsspektrum der Störung bei abgeschaltetem Sender. Zur Sicherung einer konstanten Übertragungsfunktion des Filters wird der Gewichtsvektor auf 1 normiert.

Im folgenden wird der Verarbeitungsblock zur Detektion, Zielmittenbestimmung, Zielmerkmalsextraktion und Vergleichswertspeicherung beschrieben:

a) Zieldetektion:
Zur Zieldetektion wird zuerst die Signalleistung der Empfangskanäle bestimmt, das bedeutet, es werden die gewichteten Summen der Leistungsdichtespektren der Kanäle "x" und "y" gebildet. Der Gewichtsvektor ergibt sich aus den Koeffizienten des Matched Filters. Die Ausgangswerte der Leistungsmessung der beiden Empfangskanäle werden addiert und mit einer Detektionsschwelle verglichen. Überschreitet die Leistung den Schwellwert, wird über den Ausgang "Det" die Detektion eines Objektes (Zieles) angezeigt. Der Schwellwert ist proportional der Reststörleistung, welche zu Beginn der Messung bei Abwesenheit eines Objektes ermittelt wird. Der Proportionalitätsfaktor errechnet sich aus der zulässigen Falschalarmrate. Der Vergleichswert befindet sich im Vergleichswertspeicher.

b) Zielmittenbestimmung:
Bildet man die Kreuzleistungsdichte zwischen den Empfangssignalen x, y und dem Referenzkanal r, so bestimmt danach die resultierende Kreuzleistung, berechnet mittels gewichteter Addition der Spektralwerte, die Zielrichtung. Der Imaginärteil der Kreuzleistung gibt an, in welche Richtung der Sensor im Falle eines leitenden Objektes bewegt werden muß, um zum elektrischen Schwerpunkt des Objektes zu gelangen. Diese Richtungsinformation wird über Ausgänge Dx und Dy ausgegeben. Beim Überstreichen des Zielmittelpunktes wechselt die Anzeige das Vorzeichen, dies ergibt die gewünschte Zielmittendetektion. Leitet die Oberfläche des Objektes den Strom schlechter als das umgebende Medium, so ist das Richtungssignal invertiert, eine Zielmittendetektion ist denoch möglich.

Zielmerkmalextraktion:

Die Relativphase des Empfangssignal hängt nicht nur von der Zielrichtung ab, sondern auch von den elektromagnetischen Eigenschaften der Objektoberfläche. Die komplexe Kreuz leistung, normiert auf die Sendeleistung, ändert sich mit der Sendefrequenz. Es wird diese normierte Kreuzleistungsdichte bei verschiedenen Frequenzen gemessen. Man erhält damit die Übertragungsfunktion $F(\omega)$ des Rückstreuvorgangs. Diese Übertragungsfunktion wird von diesem Verarbeitungsblock ausgegeben, sie läßt sich danach zur Zielmerkmalsextraktion auf verschiedener Weise verwenden.

1. Es wird eine normierte Übertragungsfunktion gebildet, mit den gemessenen Bezugskurven der verschiedenen Materialien verglichen und das wahrscheinlichste Material angegeben. Normiert bedeutet in diesem Zusammenhang, daß die Übertragungsfunktion bei einer festen Frequenz betragsmäßig auf 1 gesetzt und die anderen Frequenzwerte entsprechend angepasst werden. Die Bezugskurven werden messtechnisch mit den verschiedenen Objektmaterialien und Umgebungen (Medien) ermittelt.

2. An die gemessene Übertragungsfunktion wird eine Modellfunktion mit den noch zu bestimmenden elektromagnetischen Parametern

- Leitfähigkeit,
- relative Dielektrizitätskonstante,
- relative Permeabilität

und einem definierten, vorgebbaren Gütekriterium angepaßt. Die drei geschätzten Parameter werden mit denjenigen der in Frage kommenden Materialien verglichen und das wahrscheinlichste Material angegeben.

Aus der vorstehenden Beschreibung des Metalldetektors I geht hervor, daß zwischen Eichzyklen und Messzyklen unterschieden wird.

Eichzyklen:

Es erfolgt eine Übersprechkompensation. Der Generator erzeugt ein quarzstabilisiertes sinusförmiges Signal. Dieses Signal wird verstärkt und über die Anpasschaltung der Sendespule zugeführt. Aufgrund eines restlichen Abgleichfehlers und der Anisotropie des Raumes, in welchem sich die Anordnung befindet, wird auch in Abwesenheit eines Objektes eine Signalspannung in den Empfangskanälen induziert. Die (Empfangs-)Leistungen dieser Restsignale müssen minimiert werden. Zu diesem Zweck werden diese Störsignale verstärkt und über den A/D- Wandler dem Rechner zugeführt. Die Restspannungen werden mit Hilfe von Korrekturspannungen kompensiert. Die Korrekturspannungen werden durch Filtern des Erregersignals gewonnen. Die Filterkoeffizienten ergeben sich aus den Kreuzkorrelationsfunktionen zwischen den Empfangskanälen und dem Sendesignal. Die Berechnung des Kompensationsfilters erfolgt zu Beginn eines Einsatzes und minimiert damit das Restsignal.

Einstellung der Gewichte des Optimalfilters:

Zuerst wird das Empfangssignal bei abgeschaltetem Sender aufgenommen und mit Hilfe der FFT (Fast Fourier Transformation) das Störspektrum beider (Empfangs-)Kanäle ermittelt. Bei eingeschaltetem Signalgenerator wird dessen Leistungsspektrum aufgenommen. Bei Kenntnis beider Spektren lassen sich die Koeffizienten des Optimalfilters angeben. Die Neuberechnung der Filterkoeffizienten erfolgt vor jedem Messzyklus. Nach der Einstellung der Filter wird die Reststörleistung gemessen; diese dient der Berechnung eines Detektionsschwellwertes.

Messung:

Der Generator erzeugt ein quarzstabilisiertes sinusförmiges Signal. Dieses Signal wird verstärkt und über die Anpaßschaltung der Sendespule zugeführt.

Die vom Streufeld in den Empfangsspulen induzierten Spannungen werden rauscharm verstärkt, und über einen A/D-Wandler dem Rechner zugeführt. Die Empfangsspulen "messen" die zeitlichen Ableitungen der Z-Komponente des rückgestreuten Magnetfeldes.

Aufgrund der Beschaltung der Empfangsspulen wird der Gradient der Z-Komponente gebildet; dies erlaubt eine Zielmittelpunktdetektion. Der Rechner befreit das Empfangssignal von unerwünschten Signalanteilen und analysiert das Signal mit Hilfe einer FFT. Die Bildfolge der Sende und Empfangssignale bilden komplexe Vektoren. Zur weiteren Auswertung werden Bilinearformen zu diesen Vektoren gebildet. Die dazugehörige Matrix ist diagonal; die Elemente ermitteln sich aus dem Betragsquadrat der Matched-Filterkoefizienten. Mit Hilfe dieser Größen wird das Ziel (Objekt) detektiert und die Zielmitte lokalisiert. Weiterhin ist es möglich, bei grober Kenntnis der Zielrichtung (links oder rechts vom Ziel sowie vor oder hinter dem Ziel) den komplexen Reflexionskoeffizienten zu ermitteln. Wird dieser über einen breiten Frequenzbereich besimmt, so läßt sich der Verlauf in einer Ortskurve darstellen. Diese Ortskurve hängt, bei bekannter Umgebung und deren bekannten elektromagnetischen Eigenschaften, auf eindeutige Weise von den elektromagnetischen Materialkonstanten der zu detektierenden Objektoberfläche ab. Diese Ortskurve definiert ein Gleichungssystem zur Ermittlung der Leitfähigkeit, der relativen Permeabilität sowie der Dielektrizitätskonstanten.

Detektion:

Die Summe der quadratischen Formen des X-Kanales und des Y-Kanales wird mit einem zugehörigen Schwellwert verglichen. Überschreitet dieses Summensignal in m von M Fällen, wobei m sowie M vorgebbare ganze positive Zahlen sind, den Schwellwert, so wird auf ein Ziel entschieden. Dieser Schwellwert wird so gesetzt (vorgegeben), daß für einen vorgebbaren Störpegel die Falschalarmrate einen vorgebbaren Wert nicht überschreitet.

Zielmittedetektion:

Die Anordnung mißt die Differenz des magnetischen Flusses zwischen rechter und linker Empfangsantenne oder vorderen und hinteren Spulenanordnung. Sind die Empfangsspulen bezüglich des Sendefeldes symmetrisiert, so wird die Differenz des magnetischen Flusses, hervorgerufen vom Oberflächenstrom des Streuobjektes, gemessen. Befindet sich die Anordnung über dem elektrischen Schwerpunkt des Objektes, so verschwinden die Empfangsspannungen, da der magnetische Fluß in beiden Empfangsspulen gleich groß ist. Dieser Nulldurchgang wird detektiert. Weiterhin wechselt das Empfangssignal seine Phase bezüglich des Sendesignals. Die Richtung mit welcher sich die Phase ändert, enthält eine Information über die Oberflächenleitfähigkeit des Objektes, bezogen auf die Leitfähigkeit des umgebenden Mediums.

Schätzung der elektromagnetischen Parameter des Zielobjektes:

Amplitude und Phase des Rückstreufeldes des zu detektierenden Objektes hängen in an sich komplizierter Weise vom Erregerfeld, dem Medium, welches das Objekt umgibt, sowie den Materialeigenschaften der Objektoberfläche ab. Bei den obengenannten geringen Abständen können die Phasenänderungen, aufgrund der (Signal-)Laufzeit, und die an sich vorhandenen Wirbelstromverluste des Mediums vernachlässigt werden. Die Elemente der die Streuung beschreibenden Rückstreumatrix ergeben sich durch die Bestimmung des Quotienten aus empfangenem Signal und Sendesignal. Die Matrixelemente lassen sich mit Hilfe der Streutheorie bestimmen. Durch Messung dieser Rückstreukoeffizienten bei verschiedenen Frequenzen, beispielsweise drei, genügenden Frequenzabstandes ergibt sich ein überbestimmtes Gleichungssystem für die Oberflächenleitfähigkeit des zu detektierenden Objektes, der relativen Permeabilität und/oder der relativen Dielektrizitätskonstante. Diesen elektromagnetischen Materialkonstanten lassen sich Stoffgruppen zuordnen.

Aufbau des Metalldetektors II, FIG. 2:

Der Aufbau des Metalldetektors II entspricht dem des Metalldetektors I mit den folgenden Änderungen:

1. Die Empfangsantennenachsen sind orthogonal zur Achse der Sendespule S angeordnet. Fig.2a zeigt Anordnungsbeispiele für Anordnung und Ausrichtung der Sende- und Empfangsspulen eines Fernfeldsensors. Diese Beispiele werden in Abhängigkeit von den vorhandenen räumlichen Erfordernissen gewählt.

2. Es erfolgt ein mechanischer Abgleich der Empfangsspulen mittels Servomotoren welcher das direkte Überkoppeln zwischen Sende- und Empfangsspulen reduziert.

3. Mit Hilfe zusätzlicher Kompensationsspulen wird ein Korrektursignal erzeugt, mit dessen Hilfe eine analoge Kompensation des Übersprechsignals erfolgt.

Funktion des Metalldetektors II:

Die Funktion des Sendezweiges und die Empfangsvorverarbeitung entspricht derjenigen des Metalldetektors I (FIG. 1) mit den folgenden Änderungen:

1. Die Antennenanordnung wird zur Zielpeilung benutzt.

2.Es werden die spezifische Leitfähigkeit und die relative Dielektrizitätskonstante des umgebenden Mediums gemessen.

3. Aus dem Verlauf des Empfangsamplituden wird die Entfernung geschätzt.

4. Mit Hilfe der geschätzten Entfernung und der Empfangssignalstärke wird die effektive Rückstreufläche des zu detektierenden Objektes ermittelt.

Der Metalldetektor II erlaubt folgende Funktionen:

- Detektion
- Entfernungsschätzung
- Zielrichtungsschätzung
- Zielmittedetektion
- Zielgrößenschätzung.
- Materialparameterschätzung

Fig.2b zeigt den Aufbau eines Fernfeldsensors.Dieser besteht aus folgenden Komponenten:

- Rechner
- Oszillator
- Sendeverstärker
- Stromabgriff
- Anpassnetzwerk
- Sendespule
- Zwei Empfangsspulen
- Zwei Kompensationsspulen
- Fünf Vorverstärker
- Zwei Differenzverstärker
- Zwei Phasenkompensationsnetzwerke
- Zwei schaltbare Vorfilter
- Drei A/D-Wandler
- Servos (Servomotoren) zum Verstellen der Empfangs antennen und der Kompensationsantennen
- Leitwertsensor

Der Rechner steuert den Oszillator und das Anpaßnetzwerk in Abhängigkeit von einer vorgegebenen Frequenzfolge und übernimmt die Signalverarbeitung der Empfangskanäle S1, S2 und des Bezugskanals R gemäß Fig. 2b.

Der Oszillator erzeugt eine Sinusspannung. Die Frequenzstabilisierung erfolgt mit Hilfe einer PLL-Schleife und eines Quarzreferenzoszillators. Durch Veränderung des Teilerverhältnisses eines einstellbaren Teilers läßt sich der Oszillator in festen Frequenzschritten, z.B. 100 Hz - Schritten, durchstimmen. Das Sinussignal führt zum Sendeverstärker. Der Sendeverstärker verstärkt das Oszillatorsignal und liefert den notwendigen Sendestrom für die Sendespule.

Am Stromabgriff wird eine stromproportionale Spannung abgegriffen,sie repräsentiert das Bezugssignal R.

Das Anpassnetzwerk besteht aus einem Anpasstransformator mit Abgriffen und Kompensationskondensatoren. Die Kondensatoren kompensieren den induktiven Blindwiderstand der Sendespule, der Transformator ermöglicht die Leistungsanpassung der Sendespule an den Verstärkerausgang. Jede Sendefrequenz erfordert einen eigenen Kompensationskondensator.

Die Sendespule besteht aus einer Luftspule, deren Achse vertikal ausgerichtet ist.

Die Empfangsspulen sind auf einem Ferritkern aufgebracht, es sind jedoch auch Luftspulen verwendbar. Die Empfangsantennen sind um zwei Achsen verstellbar zur Reduktion der Störeinkopplung. Die Ausgänge der Spulen führen auf rauscharme Verstärker.

Die Kompensationspulen besitzen nur wenige Windungen z.B. zwei und sind um eine Achse drehbar. Die Spulen dienen der analogen Kompensation der Störsignale, welche in die Empfangsspulen eingekoppelt werden. Durch Drehen der Spule läßt sich Größe und die Polarität des Kompensationssignals verändern. Der Ausgang der Empfangswicklungen wird den Vorverstärkern zugeführt.

Vier der fünf Vorverstärker sind rauscharme Ausführungen. Diese verstärken die Empfangssignale der Kanäle S1, S2 und der zugeordneten Kompensationskanäle auf einen A/D-Wandler gemäßen Wert. Die Verstärkung der Kompensationskanäle ist zur besseren Unterdrückung der Störung veränderbar.

Zum Ausgleich geringer Phasendifferenzen zwischen Empfangssignal und dem zugehörigen Kompensationssignal dient das Phasenkompensationsnetzwerk.

Der fünfte Vorverstärker verstärkt die am Widerstand abgegriffene Spannung; sie bildet das Referenzsignal (Bezugsignal) "R".

Im Differernzverstärker wird das restliche Störsignal mit Hilfe des Kompensationssignales unterdrückt.

Die A/D-Wandler erzeugen aus dem analogen Signal eine Bitfolge. Die Abtastrate sollte mindestens 40kHz betragen, die Wortbreite 16 Bit.

Die Servoantriebe dienen der Verstellung der Empfangsspulen und der Kompensationswicklungen.

Der Leitwertsensor mißt den Leitwert des umgebenden Mediums.

Die schaltbaren Vorfilter engen den Empfangsbereich ein; dies reduziert den Störpegel und entlastet damit die A/D-Wandler. Die Vorfilter werden in ihrem Übertragungsbereich an die Arbeitsfreuenz angepasst.

Beschreibung zu Fig. 2c "Störkompensation und Matched-Filter Berechnung":

Fig. 2c illustriert den Datenfluß der Signalvorverarbeitung im Rechner. Das Datenflußdiagramm enthällt folgende Verarbeitungsblöcke:

- Fast Fourier Transformation (FFT)
- Berechnung der Impulsantwort für die Kompensations filter (Berechnung Hc1 / Hc2)
- Die Kompensationsfilter (Hc1 Hc2)
- Additionsstufen
- Koeffzientenberechnung für die Gewichtungsfilter (Koeffiz Matched Filter)

Verarbeitungsblock FFT:

Die Verbeitungsblöcke FFT für die Empfangskanäle "S1 ", "S2 " sowie für den Referenkanal "R" am Signaleingang dienen während des Eichzyklus der Vorverarbeitung der Signale zur Berechnung der Koeffizienten für das Kompensationsfilter und das Gewichtungsfilter (Matched Filter). Die Blöcke enthalten außer dem eigentlichen FFT- Algorithmus auch die Fensterung der Signale; im Falle der Koeffizientenberechnung die Rechteckfensterung, im Falle der Signalanalyse vorzugsweise die Dolph-Chebeyshev-Fensterung.

Kompensationsfilters. (Hc1 Hc2):

Das Kompensationfilter hat die Aufgabe die Magnetfelderzeugung und die durch mangelnde Entkopplung der Sende und Empfangsspule sowie durch Raumanisotropie hervorgerufene und nicht mechanisch kompensierbare Störungen nachzubilden. Das Kompensationfilter wird vom Referenzsignal angeregt und liefert am Ausgang die Nachbildung der Störung. Durch Subtraktion von der realen Störung kann die Reststörleistung minimiert werden.

Berechnung der Impulsantwort des Kompensationsfilter (Berechnung Hc1 / Hc2):

Die optimale Impulsantwort ergibt sich als Lösung eines linearen Gleichunggsytems. Dabei ist der LösungsveKtor die Impulsantwort des Filters. Die Zeilenvektoren der Koeffizientenmatrix ergeben sich durch zyklisches Verschieben der Autokorrelationsfunktion des Referenzkanals; die Inhomogenitätsvektoren errechnen sich aus der Kreuzkorrelationsfunktion der Störungen der Kanäle "S1" und "S2" mit dem Referenzsignal "R". Die Schätzung der Korrelationsfunktionen erfolgt nach Fouriertransformation und Bildung der Kreuzleistungsdichte bzw. der Autoleistungsdichte durch deren Rücktransformation in den Zeitbereich. Zur Verbesserung der statistischen Stabilität werden mehrere Zeitproben der Signale entnommen, fouriertransformiert und die resultierenden Leistungsdichten einem Mittelungsprozess unterworfen. Bei der Bildung der Korrelationsfunktion sind die üblichen Vorsorgemaßnahmen zu treffen um zu verhindern, daß eine zyklische Korrelation gebildet wird.

Additionsstufen:

In den Additionsstufen wird das mit Hilfe der Kompensationsfilter aus dem Sendesignal erzeugte Kompensationssignal mit negativem Vorzeichen zum Störsignal addiert.

Koeffizientenberechnung für die Gewichtungsfilter:

Für die Zieldetektion, die Zielmittenbestimmung und die Zielmerksmalextraktion müssen Korrelationsprodukte mit Schwellwerten verglichen oder untereinander in Beziehung gesetzt werden. So ist z.B. die Signalleistung der quadratische Mittelwert des Signales. Diese Größen lassen sich mit Hilfe der inversen Fouriertransformation aus den assoziierten Leistungsdichten gewinnen. Zur besseren Schätzung dieser Größen müssen die Signale zuerst gefiltert werden. Dies erfolgt am günstigsten in der Frequenz domäne durch Multiplikation mit einer Gewichtsfunktion. Diese Gewichte errechnen sich mit Hilfe eines Optimalitätskriterium aus dem Verhältnis aus Leistungsspektrum des Senders und dem Leistungsspektrum der Störung bei abgeschaltetem Sender. Zur Sicherung einer konstanten Übertragungsfunktion des Filters wird der Gewichtsvektor auf 1 normiert.

Beschreibung zu Fig. 2d "Signalauswertung":

Die Signalauswertung umfasst die Aufgaben :

- Zieldetektion
- Zielpeilung
- Zielmittendetektion
- Entfernungsschätzung
- Größenschätzung
- Ortskurvenbetimmung und Zielparameterextraktion

Die Signalauswertung erfolgt im Bildbereich, deshalb werden die Signale R, S1, S2 der Fouriertransformation unterworfen. Dies erfolgt in den mit "FFT" bezeichneten Funktionsblöcken. Die notwendige Zeitfensterung wird ebenfalls hier durchgeführt.

Zieldetektion:

Zur Zieldetektion wird zuerst die Signalleistung der Empfangskanäle bestimmt . Zur Leistungsbestimmung werden die gewichteten Summen der Leistungsdichtespektren der Kanäle "S1" und "S2" gebildet; dies erfolgt in den mit S1 w11 S1 bzw. S2 w22 S2 bezeichneten Funktionsblöcken. Die Gewichtsmatrix (Diagonalelemente) ergeben sich aus den Koeffizienten des Matched Filters. Die Ausgangswerte der Leistungsmessung beider Empfangskanäle werden addiert und mit einer Detektionsschwelle verglichen. Dies ist in Fig. 2d durch das Summationssymbol und den Funktionsblock "Vergleicher" dargestellt. Überschreitet die Leistung den Schwellwert wird ein Detektionsflag gesetzt. Der Schwellwert ist proportional der Reststörleistung, welche zu Beginn der Messung bei Abwesenheit eines Objektes ermittelt wird. Der Proportionalitätsfaktor errechnet sich aus der zulässigen Falschalarmrate. Der Vergleichswert befindet sich im Schwellwertspeicher -Funktionsblock Schwellwert.

Entfernungschätzung:

Die Empfangs leistung ist proportional einem Polynom vierter Ordnung in der Frequenz. Die Ausbreitungsverluste (Wirbelstromverluste) sind proportional der Exponentialfunktion, in deren Argument (negativ) die Entfernung linear, die Frequenz mit der Quadratwurzel eingeht. Dies führt zu einem ausgeprägten Leistungsmaximum. Durch Messung der Empfangsleistung zu verschiedenen Frequenzen und Anpassung an die analytische Musterfunktion wird die Entfernung geschätzt (Funktionsblock Entfernungsschätzung).

Zielpeilung:

Zur Erzeugung eines empfangsleistungsunabhängigen Peilsignal werden zwei mit S und D bezeichneten Empfangskeulen gebildet. Der Monopulsquotient D/S hängt dann nicht mehr von der Empfangsleistung ab. Damit diese Winkelschätzung in der Umgebung der Blickrichtung erwartungstreu erfolgt und eine Links-Rechts-Diskriminierung möglich ist, müssen die beiden Empfangskeulen folgende Symmetrieeigenschaften besitzen.:

S ist eine gerade Funktion des Zielwinkels, bezogen auf die Blickrichtung, und besitzt in Blickrichtung ein Maximum.

D ist eine ungerade Funktion des Zielwinkels und besitzt in Blickrichtung eine Nullstelle mit einem Phasensprung von 180°.

Die Generierung der beiden Empfangskeulen erfolgt durch die Bildung von Linearkombinationen der Empfangskanäle S1 und S2 im Funktionsblock "Lineare Transformation". Zur Verbesserung der Peileigenschaften müssen die den Empfangskeulen entsprechenden Signale gefiltert werden. Diese Filterung wird durch Multiplikation der Empfangsspektren mit den Gewichten des Matched Filter realisiert. Der Monopulsquotient Q läßt sich in Vektorschreibweise wie folgt darstellen.

$$Q = ( \underline{S}^+ \, \underline{w} \, \underline{D} ) / ( \underline{S}^+ \, \underline{w} \, \underline{S} ),$$

dabei bedeutet $\underline{S}^+$ die hermitisch transponierte Matrix der Matrix $\underline{S}$, $\underline{w}$ eine Diagonalmatrix mit dem Betragsquadrat der Filtergewichte in der Diagonale.

Die Bildung der Bilinearformen erfolgt in den mit S w D und S w S bezeichneten Funktionsblöcken, die Quotientenbildung wird durch das Divisionszeichen symbolisiert. An Hand der messtechnisch ermittelten Monopulskennlinie läßt sich aus dem gemessenen Monopulsquotienten der dazugehörige Zielwinkel ermitteln; der entsprechende Funktionsblock ist durch fl gekennzeichnet. Das Winkelrauschen läßt sich durch zeitliche Mittelung verringern ( Block "Mittelung"). Danach folgt die Ausgabe der Zielrichtung.

Zielmittendetektion:

Direkt über dem elektromagnetischen Zentrum des Objektes durchläuft die Empfangsleistung der beiden Kanäle ein lokales Minimum. Dieses Minimum ist ebenfalls im Summenkanal detektierbar.

Funktion der Phasen- und Amplitudenkompensation:

Die Amplituden und Phasen des Empfangssignals hängen unter anderm auch von der Entfernung ab. Dieser für die Zielmerkmalsextraktion unerwünsche Einfluß wird kompensiert. Dies ist bei hinreichender Kenntnis der Entfernung und der elektromagnetischen Eigenschaften des Übertragungsmediums möglich.

Zielmerkmalextraktion:

Die Relativphase des Empfangssignals hängt nicht nur von der Entfernung ab, sondern auch yon den elektromagnetischen Eigenschaften der Objektoberfläche. Die komplexe Kreuzleistung normiert auf die Sendeleistung ändert sich mit der Sendefrequenz. Es wird diese normierte Kreuzleistungsdichte bei verschiedenen Frequenzen gemessen; man erhält damit die Übertragungsfunktion F(ω) des Rückstreuvorgangs. Diese Übertragungsfunktion wird von diesem Verarbeitungsblock ausgegeben, sie läßt sich danach zur Zielmerkmalsextraktion auf verschiedener Weise verwenden.

1. Es wird eine normierte Übertragungsfunktion gebildet, mit den gemessenen Bezugskurven der verschiedenen Materialien verglichen und das wahrscheinlichste Material angeben. Normiert bedeutet in diesem Zusammenhang daß die Übertragungsfunktion bei einer festen Frequenz betragsmäßig auf 1 gesetzt und die anderen Frequenzwerte entsprechend angepasst werden. Die Bezugskurven werden messtechnisch mit den verschiedenen Objektmaterialien und Umgebungen ermittelt.
2. An die gemessene Übertragungsfunktion wird eine Modellfunktion mit den noch zu bestimmenden elektromagnetischen Parametern

- Leitfähigkeit
- relative Dialektrizitätskonstante
- relative Permeabilität

und einem definierten Gütekriterium angepaßt. Die drei geschätzten Parameter werden mit denjenigen der in Frage kommenden Materialien verglichen und das wahrscheinlichste Material angegeben.

Bei der Beschreibung der Funktion wird zwischen Eichzyklen und Messzyklen unterschieden.

Eichzyklen:

Dabei erfolgt eine Übersprechkompensation gemäß Fig. 2b und Fig. 2c.

Der (Frequenz-sweep-)Generator, der in der Frequenz durchstimmbar ist, erzeugt ein quarzstabilisiertes sinusförmiges Signal. Dieses Signal wird verstärkt und über die Anpaßschaltung der Sendespule zugeführt. Aufgrund eines restlichen Abgleichfehlers und der Anisotropie des Raumes wird auch in Abwesenheit eines Objektes eine Signalspannung in den Empfangskanälen induziert. Die Leistungen dieser Restsignale müssen minimiert werden. Zu diesem Zweck werden die (Empfangs-)Signale verstärkt und über die A/D-Wandler dem Rechner zugeführt. Zuerst erfolgt die Messung der Fehlerspannungen ohne Berücksichtigung der Korrektursignale der Kompensationspulen. Durch ein mechanisches Verstellen der Empfangsspulen mittels Servomotoren wird die Fehlerspannung minimiert. In einem weiteren Schritt wird dem (Empfangs-)Signal das Signal der Kompensationsspulen überlagert und dieses in der Amplitude und Phase solange variiert (geändert), bis das Restsignal zum Minimum wird. Die weitere Kompensation erfolgt wie beim Ausführungsbeispiel 1.

Einstellung der Gewichte des Optimalfilters gemäß Fig. 2c: Die Einstellung der Gewichte erfolgt analog zum Ausführungsbeispiel 1. Nach der Einstellung der Filter wird die Reststörleistung gemessen; diese dient der Berechnung des Detektionsschwellwertes.

Messung:

Diese erfolgt gemäß Fig. 2b sowie Fig. 2d.

Zieldetektion:

Verfahren wie bei dem Metalldetektor I

Zielrichtungsschätzung:

Der (Frequenz-sweep-)Generator erzeugt ein quarzstabilisiertes sinusförmiges Signal. Dieses Signal wird verstärkt und über die Anpaßschaltung der Sendespule zugeführt. Die vom Streufeld in den Empfangsspulen induzierten Spannungen werden verstärkt und über einen A/D-Wandler dem Rechner zugeführt. Die Empfangsspulen "messen" die zeitlichen Ableitungen der X- und Y-Komponenten des rückgestreuten Magnetfeldes. Der Rechner befreit das Empfangssignal von unerwünschten Signalanteilen, z.B. Störanteilen, und analysiert das Signal mit Hilfe einer FFT. Die Bildfolge der Sende- und Empfangssignale bilden komplexe Vektoren. Zur weiteren Auswertung werden in Abhängigkeit von der Empfangsantennenanordnung und der Empfangskanaleigenschaften zwei mit S und D bezeichnete Linearkombinationen der beiden Empfangsvektoren gebildet. Zur Gewinnung eines von der Empfangsleistung unabhängigen Maßes für die Zielrichtung wird gemäß Fig. 2c die Bilinearform aus D und S und die quadratische Form in S gebildet. Der sogenannte Monopulsquotient aus beiden Größen ist eine Funktion des Zielwinkels. Die Bildung von S und D erfolgt nach der folgenden Maßgabe:

- Der Monopulsquotient ist in der Umgebung der Bezugsachse eine stetige Funktion des Winkels.

- Die Winkelschätzung ist erwartungstreu.

Die den Bilininearformen zugeordnete Matrix ist diagonal, die Elemente ermitteln sich aus dem Betragsquadrat der Matched-Filterkoefizienten.
Der Monopulsquotient ist zweifach mehrdeutig im Winkel (vorne/hinten, bezogen auf die Detektionsrichtung). Diese Mehrdeutigkeit wird mit Hilfe des nachfolgend beschriebenen Entfernungsschätzverfahrens aufgelöst. Aus der gemessenen Entfernungsänderung lässt sich die vorne/hinten - Mehrdeutigkeit beseitigen.

Entfernungsmessung:

Die Leistung des für die Detektion gebildeten Summensignales hängt außer von der Sendeleistung, der Abmessung der Sendespule und des Objektes sowie der Entfernung eines Zieles (Objekt) auch von der Erregerfrequenz der Sendespule ab. Variiert man die Sendefrequenz bei festgehaltenem Sendestrom und fester Entfernung, so durchläuft die Empfangs leistung ein ausgeprägtes Maximum. Die zu diesem Maximum gehörende Erregerfrequenz hängt von den elektromagnetischen Eigenschaften des Mediums, in dem sich ein Ziel befindet, beispielsweise Seewasser, und von der Entfernung des Zieles ab. Bei Kenntnis dieser Eigenschaften des Mediums und der optimalen Frequenz läßt sich die Entfernung schätzen, z.B. anhand von Vergleichen mit empirisch durchgeführten Versuchsmessungen:

Zielmittedetektion:

Befinden sich die orthogonalen Empfangsspulen direkt über dem "Schwerpunkt" der Stromverteilung, so verschwindet das Empfangssignal und die Relativphasen der Empfangssignale drehen um 180 Grad. Diese beiden Eigenschaften werden zur Zielmittedetektion verwendet.

Zielgrößenschätzung:

Bei Kenntnis der elektrischen Parameter des beispielhaft erwähnten Seewassers, der geschätzten Entfernung und Kenntnis der Sensorparameter sowie des Erregerstromes ist die Größe der Empfangs leistung ein direktes Maß für die elektromagnetische Größe des Objektes.

Materialparameterschätzung:

Die Materialparameterschätzung erfordert einen höheren Störabstand als die Detektion, so daß nur in der näheren Umgebung diese Schätzung möglich ist. Eine etwa notwendige Laufzeit und Dämpfungskompensation erfolgt mit Hilfe der geschätzten Entfernung und den damit bekannten Umgebungsparametern. Ansonsten erfolgt die Paramterschätzung in Analogie zu jener des Ausführungsbeispiels 1.
Mit den beschriebenen Anordnungen ist vorteilhafterweise ein hohe Empfindlichkeit bei einem guten Störspannungsabstand (S/N-Verhältnis) erreichbar. Dies beruht darauf, daß quellenkorrelierte Störungen, beispielsweise ein Übersprechen des Sendesignals von der Sendespule auf die Empfangsspulen sowie Rückstreuungen des Sendesignals gemessen und anschließend mit dem Sendesignal korreliert werden. Daran anschließend erfolgt mit Hilfe eines Filters sowie einer Subtraktionsstufe eine Kompensation der Störungen.
Die Erfindung ist nicht auf die beschriebenen Ausführungsbeispiele beschränkt, sondern sinngemäß auf weitere anwendbar. Beispielsweise ist es möglich, als Sendesignal ein frequenzmoduliertes (frequenzvariables) Signal zu verwenden und das zugehörige Empfangssignal mit Hilfe eines entsprechenden frequenzvariablen, angepaßten Filters, das auch Matched Filter genannt wird, auszuwerten. Damit ist eine besonders gute Verringerung der Störungen möglich.
Weiterhin ist es beispielsweise möglich, die Sendespule und/oder die Empfangsspulen auf ein Ziel (Objekt) auszurichten, beispielsweise mittels mindestens eines Servomotors, der eine Drehung der Sende- und/oder Empfangsspulen um vorgebbare Drehachsen bewirkt. Damit ist beispielsweise eine Verfolgung (Tracking) eines sich bewegenden Objektes möglich. Mit einer solchen mechanischen Ausrichtung der Spulen ist eine zusätzliche Kompensation und/oder Minimierung von quellenkorrelierten Störsignalen möglich.
Mit Hilfe derartiger Maßnahmen ist beispielsweise ein Abgleich der beschriebenen Anordnung(en) möglich, so daß ein erwachsener Mensch, der infolge seiner elektrisch leitenden Körperflüssigkeit(en) ein elektrisch leitendes Objekt darstellt, bis zu einer Entfernung von ungefähr drei Metern sicher detektiert werden kann.

**Patentansprüche**

1. Verfahren zur Detektion eines elektrisch leitenden Objektes mit Hilfe einer Sende- und/oder Empfangsantenne für elektromagnetische Strahlung, wobei

   - von der Sendeantenne ein moduliertes Sendesignal ausgesandt wird und
   - das zugehörige Empfangssignal mit dem Sendesignal korreliert und ausgewertet wird, <u>dadurch gekennzeichnet,</u>
   - daß orthogonal zueinander angeordnete Empfangsantennen verwendet werden, und
   - daß jede Empfangsantenne aus mindestens zwei Empfangsspulen (R, L; V, H) besteht, die als Serienschaltung mit gegenläufigem Wicklungssinn angeordnet werden.

2. Verfahren nach Anspruch 1, dadurch gekennzeichnet, daß das Sendesignal ein sinusförmiges Signal ist, dessen Frequenz zeitlich periodisch geändert wird.

3. Verfahren nach Anspruch 1 oder Anspruch 2, dadurch gekennzeichnet, daß die Frequenz des Sendesignals in einem Frequenzbereich von 1 kHz bis 1 MHz liegt.

4. Verfahren nach einem der vorhergehenden Ansprüche, dadurch gekennzeichnet, daß die Korrelation des Empfangssignales mit dem Sendesignal durch ein rein digital arbeitendes Auswerteverfahren erfolgt.

5. Verfahren nach einem der vorhergehenden Ansprüche, dadurch gekennzeichnet, daß quellenkorrelierte Störungen gemessen, mit dem Sendesignal korreliert und mittels eines Filters sowie einer Subtraktionsstufe kompensiert werden.

6. Verfahren nach einem der vorhergehenden Ansprüche, dadurch gekennzeichnet, daß ein frequenzvariables Sendesignal und ein daran angepaßtes Filter (matched Filter) verwendet werden.

7. Verfahren nach einem aer vorhergehenden Ansprüche, dadurch gekennzeichnet, daß die Sendespule und/oder die Empfangsspulen zur Kompensation sowie Minimierung quellenkorrelierter Störungen mechanisch auf ein Ziel (Objekt) ausgerichtet werden.

8. Anordnung zur Detektion eines elektrisch leitenden Objektes mit Hilfe einer Sende- und/oder Empfangsantenne für elektromagnetische Strahlung, wobei

   - von der Sendeantenne ein moduliertes Sendesignal ausgesandt wird und
   - das zugehörige Empfangssignal mit dem Sendesignal korreliert und ausgewertet wird, <u>dadurch gekennzeichnet,</u>
   - daß die Sendeantenne als hohlzylinderförmige Sendespule (S) ausgebildet ist,
   - daß mindestens zwei Empfangsspulen im Inneren der Sendespule (S) angeordnet sind und
   - daß die Längsachsen der Empfangsspulen orthogonal zu einander und senkrecht zur Längsachse der Sendespule angeordnet sind.

9. Anordnung nach Anspruch 8, dadurch gekennzeichnet, daß mindestens eine Empfangsspule einen Ferritkern besitzt.

10. Anordnung nach einem der Ansprüche 8 bis 9, dadurch gekennzeichnet, daß innerhalb der Sendespule eine Kompensationsspule vorhanden ist mit einer Längsachse, die im wesentlichen parallel zu derjenigen der Sendespule ausgerichtet ist.

11. Anordnung nach einem der Ansprüche 8 bis 10, dadurch gekennzeichnet, daß die Kompensationsspule im Bereich der Empfangsspulen angeordnet ist.

**Claims**

1. Method of detecting an electrically conductive object with the assistance of a transmitting and/or receiving aerial for electromagnetic radiation, wherein

   - a modulated signal is transmitted by the transmitting aerial and
   - the associated received signal is correlated with the transmitted signal and evaluated, characterised in that
   - receiving aerials arranged orthogonally to one another are used, and
   - each receiving aerial consists of at least two receiver coils (R, L; V, H), which are arranged as a series circuit with opposite sense of winding.

2. Method according to claim 1, characterised in that the transmitted signal is a sinusoidal signal, the frequency of which is changed periodically in time.

3. Method according to claim 1 or claim 2, characterised in that the frequency of the transmitted signal lies in a frequency range of 1 kHz to 1 MHz.

4. Method according to one of the preceding claims, characterised in that the correlation of the received signal with the transmitted signal is effected by an evaluating process operating purely digitally.

5. Method according to one of the preceding claims, characterised in that source-correlated disturbances are measured, correlated with the transmitted signal and compensated for by means of a filter as well as a subtraction stage.

6. Method according to one of the preceding claims, characterised in that a frequency-variable transmitted signal and a filter matched thereto (matched filter) are used.

7. Method according to one of the preceding claims, characterised in that the transmitting coil and/or the receiving coil are mechanically aligned with a target (objective) to compensate for as well as minimise source-correlated disturbances.

8. Arrangement for detecting an electrically conductive object with the assistance of a transmitting and/or receiving aerial for electromagnetic radiation, wherein

   - a modulated signal is transmitted by the transmitting aerial and
   - the associated received signal is correlated with the transmitted signal and evaluated, characterised in that
   - the transmitting aerial is constructed as a hollow cylindrical transmitting coil (S),
   - at least two receiving coils are arranged in the interior of the transmitting coil (S) and
   - the longitudinal axes of the receiving coils are arranged orthogonally to one another and perpendicularly to the longitudinal axis of the transmitting coil.

9. Arrangement according to claim 8, characterised in that at least one receiving coil has a ferrite core.

10. Arrangement according to one of claims 8 and 9, characterised in that a compensating coil with a longitudinal axis which is aligned substantially parallel to that of the transmitting coil is present within the transmitting coil.

11. Arrangement according to one of claims 8 to 10, characterised in that the compensating coil is arranged in the region of the receiving coil.

**Revendications**

1. Procédé pour détecter un objet électriquement conducteur à l'aide d'une antenne d'émission et/ou de réception pour un rayonnement électromagnétique, selon lequel

   - l'antenne d'émission émet un signal d'émission modulé, et
   - le signal de réception associé est corrélé au signal d'émission et est exploité,

caractérisé en ce

   - qu'on utilise des antennes de réception disposées orthogonalement l'une par rapport à l'autre, et
   - que chaque antenne de réception est constituée par au moins deux bobines de réception (R, L ; V, H), qui sont montées selon un circuit série avec des sens d'enroulement opposés.

2. Procédé selon la revendication 1, caractérisé en ce que le signal d'émission est un signal de forme sinusoïdale, dont la fréquence est modifiée périodiquement dans le temps.

3. Procédé selon la revendication 1 ou la revendication 2, caractérisé en ce que la fréquence du signal d'émission est située dans une gamme de fréquences allant de 1 kHz à 1 MHz.

4. Procédé selon l'une des revendications précédentes, caractérisé en ce que la corrélation du signal de réception sur le signal d'émission s'effectue au moyen d'un procédé d'exploitation travaillant d'une manière purement numérique.

5. Procédé selon l'une des revendications précédentes, caractérisé en ce que les perturbations corrélées à la source sont mesurées, sont mises en corrélation avec le signal d'émission et sont compensées au moyen d'un filtre ainsi que d'un étage soustracteur.

6. Procédé selon l'une des revendications précédentes, caractérisé en ce qu'on utilise un signal d'émission à fréquence variable et un filtre qui y est adapté (matched filter).

7. Procédé selon l'une des revendications précédentes, caractérisé en ce que la bobine d'émission et/ou les bobines de réception sont orientées mécaniquement vers une cible (objet) pour compenser et réduire au minimum les perturbations corrélées à la source.

8. Dispositif pour la détection d'un objet électriquement conducteur exécuté à l'aide d'une antenne d'émission et/ou de réception pour un rayonnement électromagnétique, dans lequel

   - le signal d'émission modulé est émis par l'antenne d'émission, et
   - le signal de réception associé est corrélé au signal d'émission et est exploité,

caractérisé en ce

- que l'antenne d'émission est agencée sous la forme d'une bobine d'émission en forme de cylindre creux (S),
- qu'au moins deux bobines de réception sont disposées à l'intérieur de la bobine d'émission (S), et
- que les axes longitudinaux des bobines de réception sont orthogonaux entre eux et sont disposés perpendiculairement à l'axe longitudinal de la bobine d'émission.

9. Dispositif selon la revendication 8, caractérisé en ce qu'au moins une bobine de réception possède un noyau de ferrite.

10. Dispositif selon l'une des revendications 8 à 9, caractérisé en ce qu'une bobine de compensation est présente à l'intérieur de la bobine d'émission et possède un axe longitudinal qui est orienté sensiblement parallèlement à celui de la bobine d'émission.

11. Dispositif selon l'une des revendications 8 à 10, caractérisé en ce que la bobine de compensation est disposée au voisinage des bobines de réception.

Sendespule

Ortogonal angeordnete Empfangsspule X-Y

Kompensationswicklungen

Empfangsverstärker

Mischer

Tiefpaßfilter

TP

D

A

Rechner

Mischer

TP

Vorverstärker

Reeller Widerstand

Stromverstärker

Frequenz-sweep Generator

Prinzipblockschaltbild Metalldetektor I

FIG. 1

EP 0 731 929 B1

Anordnung der Sendespulen

FIG. 1A

Aufbau des Nahfeldsensors

Netzwerksteuerung

Rechner RE

Oszillatorst.

quarzstabilisiert

OS

SV

AN

Anpassnetz-werk

WI

S

V1

AD1    r

V2

AD2    x

• R    L •

V3

AD3    y

• V    H •

FIG. 1B

FIG. 1C

Rechner

Tiefpaßfilter

D

A

TP

TP

TP

Empfangsverstärker

X

Y

Vorverstärker

Frequenz-
sweep
Generator

Sendespule

Ortogonal
angeordnete
Empfangsspule X-Y

Kompensationswicklungen

Reeller
Widerstand

Stromverstärker

Prinzipblockschaltbild Metalldetektor II

FIG. 2

18

Anordnungsbeispiel für Sende- und Empfangsspulen

A1    A2    A3    Aa    Ab

Ziel    Ziel

EP 0 731 929 B1

FIG. 2A

Aufbau des magnetischen Sensors
Ausführungsbeispiel 2

FIG. 2B

EP 0 731 929 B1

FIG. 2C

Signalauswertung

$\dfrac{R\ \underline{w}\ S_1}{R\ w\ R}$

$\dfrac{R\ \underline{w}\ S_2}{R\ w\ R_2}$

Ortskurven-bestimmung für Reflektions-faktor

$F_{x,y}(\omega)=$ Übertragungsfunktionen

R S1

S2

W1
W2

r — FFT

S1 — FFT

S2 — FFT

$S_1\underline{W}11\ S_1$

$S_2\ \underline{W}22\ S_2$

Summe

Schwellwert

Vergleichung

Entfernung Schätzung

$\delta$ H2O $\epsilon$r

Phasen + Amplituden-kompensation

$\epsilon$r$\delta$

Detektionsflag

Entfernung

Große Schätzung

Oberfläche

Lineare Transformation

$\Delta$

$\Sigma$

$W_1$  $W_2$

$\Sigma\ \underline{w}\ \Delta$

$\Sigma\ \underline{w}\ \Sigma$

$W_1$  $W_2$

%

f1

$\alpha$

Mittelung

$\alpha$ Zielrichtung

Justage Spule 1  Servo Antenne 1/Kompensationsspule 1

Justage Spule 2  Servo Antenne'/Kompensationsspule'

FIG. 2D

EP 0 731 929 B1